# EUROPÄISCHE PATENTSCHRIFT

(11) **EP 0 343 456 B1**
(45) Veröffentlichungstag und Bekanntmachung des Hinweises auf die Patenterteilung: **04.08.1993**
(21) Anmeldenummer: 89108605.0
(22) Anmeldetag: 12.05.1989
(51) Int. Cl.: H02K 17/02, H02K 21/00

(54) **Elektrische Maschine, bei der aktive Eisenteile durch ein homopolares Magnetfeld vormagnetisierbar sind**
Electric machine having active iron parts premagnetizable through a homopolar magnetic field
Machine électrique ayant des pièces de fer actives prémagnétisables par un champmagnétique homopolaire

(30) Priorität: 24.05.1988 DE 3817594
(43) Veröffentlichungstag der Anmeldung: 29.11.1989
(73) Patentinhaber: SIEMENS AKTIENGESELLSCHAFT, 80333 München (DE)
(72) Erfinder: Rosenberg, Heinz, Dipl.-Ing., A-2752 Wöllersdorf (AT)

(56) Entgegenhaltungen:
- DE-B- 1 095 387
- I.E.E.E. TRANSACTIONS ON ENERGY CONVERSION Band EC-2, Nr.2,September 1987,Seiten 480-488,New York,USA;F.SHIBATA et al. :"A brushless and exciterless polyphase synchronous motor"

## Beschreibung

Die Erfindung betrifft eine elektrische Maschine, bei der aktive Eisenteile durch ein homopolares Magnetfeld vormagnetisierbar sind.

Bei einer solchen durch die DE-AS 10 95 387 bzw. DE-AS 26 46 550 bekannten Maschine ist zur Erzeugung des homopolaren Magnetfeldes eine besondere zusätzliche Wicklung erforderlich, was eine beträchtliche Erhöhung von Raumbedarf, Werkstoff- und Fertigungsaufwand sowie Leistungsverbrauch der Maschine bedingt.

Durch die Zeitschrift I.E.E.E. Transaction on energy conversion, Band EC-2, Nr. 2 September 1987, Seiten 480-488 ist es bekannt, bei bürsten- und erregermaschinenlosen Synchronmotoren im Läufer eine aus parallelen Zweigen bestehende Wicklung vorzusehen, die zu zwei im Stern geschalteten Wicklungsgruppen zusammengefaßt sind. Die in diesen Wicklungsgruppen induzierte Wechselspannung wird einem Brückengleichrichter zugeführt, dessen Gleichspannungsausgänge mit den beiden Sternpunkten der beiden Wicklungsgruppen verbunden sind. Somit wird aus den in den Wicklungen induzierten Wechselspannungen der für den Motor notwendige Erregerstrom gewonnen.

Der Erfindung liegt die Aufgabe zugrunde, eine gesonderte Wicklung für die Erzeugung des homopolaren Magnetfeldes zu vermeiden.

Die Lösung der gestellten Aufgabe gelingt nach der Erfindung dadurch, daß die Ankerwickung der Maschine eine aus zwei parallelgeschalteten Wicklungsgruppen bestehende Trommelwicklung ist, wobei jede Wicklungsgruppe aus mehreren Teilwicklungen besteht, daß an zwei hinsichtlich der induzierten Wechselspannungen äquipotentialen Punkten der beiden Wicklungsgruppen ein veränderbarer Gleichstrom eingespeist ist, daß sich jede der zwischen einem der äquipotentialen Punkte und einer Ausgangsklemme der Maschine liegenden Teilwicklungen nur über von gleichpoligen induzierenden Magnetfeldern durchsetzte Teile des Ankerumfanges erstreckt und die jeweils an den gleichen Ausgangsklemmen liegenden Teilwicklungen der beiden Wicklungsgruppen um eine bzw. um ein ungradzahliges Vielfache einer Polteilung gegeneinander versetzt angeordnet sind.

Der eingespeiste Gleichstrom bewirkt in der so ausgebildeten Ankerwicklung eine homopolare Durchflutung, die bei einer der bekannten hierfür erforderlichen Ausbildungen des magnetischen Kreises ein homopolares Magnetfeld durch Ständer und Läufer der Maschine erzeugt. Bei einer Trommelwicklung mit gerader Anzahl der Wicklungsschichten je Nut - vorzugsweise Zweischichtwicklung - kann eine längs des gesamten Ankerumfanges gleichbleibende homopolare Durchflutung erzielt werden, womit Zusatzverluste durch örtliche Schwankungen des homopolaren Magnetfeldes vermieden werden.

Durch die erfindungsgemäße Ausbildung der Ankerwicklung ergibt sich gegenüber herkömmlichen Trommelwicklungen kein zusätzlicher Fertigungsaufwand. Da der Gleichstrom zur Erzeugung des homopolaren Magnetfeldes in der Regel nur einen Bruchteil der Größe des Arbeitsstromes der Ankerwicklung ausmacht und die Verluste frequenzfremder Ströme (der Arbeitsstrom ist ein Wechselstrom) in einer gemeinsamen Wicklung einander nicht beeinflussen, beträgt der vom Gleichstrom verursachte Zusatzverlust im allgemeinen nur einige Prozente des vom Arbeitsstrom herrührenden Wicklungsverlustes. Demgemäß ist gegenüber herkömlichen Wicklungen keine oder höchstens eine geringfügige Erhöhung des Wicklungsquerschnittes erforderlich.

Anhand in der Zeichnung dargestellter Ausführungsbeispiele wird die Erfindung nachstehend näher erläutert. Es zeigt:
- FIG 1: die räumliche Lage der Teilwicklungen einer Drehstrommaschine,
- FIG 2: die Schaltung dieser Teilwicklungen mit einer Anordnung zur Gewinnung des veränderbaren Gleichstromes,
- FIG 3: die räumliche Lage der Teilwicklungen einer Einphasenmaschine und
- FIG 4: die Schaltung dieser Teilwicklungen mit einer Schaltung zur Gewinnung des veränderbaren Gleichstromes.

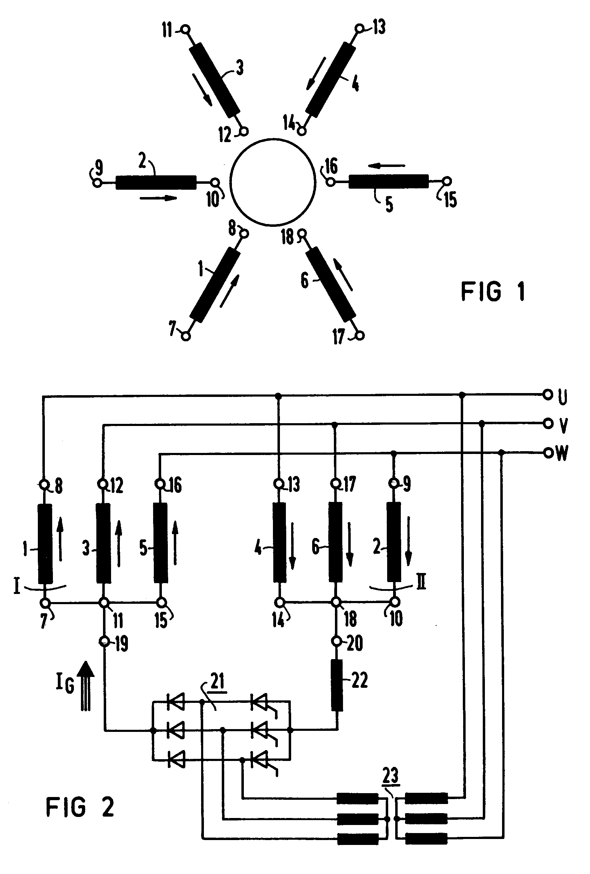

In FIG 1 ist die Anordnung von sechs Teilwicklungen 1 bis 6 bezogen auf zwei benachbarte Polteilungen einer asynchronen Drehstrommaschine dargestellt. Jede dieser Teilwicklungen 1 bis 6 erstreckt sich bei zweipoligen Maschinen nur über eine Polteilung, bei höherpoligen Maschinen nur über von gleichpoligen induzierenden Magnetfeldern durchsetzte Teile des Ankerumfanges. Die hintereinander- oder parallelgeschalteten Teile der einzelnen Teilwicklungen 1 bis 6 sind dann schrittweise um zwei Polteilungen gegeneinander versetzt. Die Teilwicklungen 1 bis 6 sind aufeinanderfolgend um jeweils ein Drittel einer Polteilung versetzt angeordnet und bilden, wie durch Vergleich der Klemmenbezeichnungen 7 bis 18 in den Figuren 1 und 2 hervorgeht, zwei an den Ausgangsklemmen U, V, W parallelgeschaltete dreiphasige Wicklungsgruppen I und II mit den getrennten Sternpunkten 19 und 20.

Aus FIG 1 ist ferner ersichtlich, daß die gleichphasigen Teilwicklungen 1, 4 bzw. 3, 6 bzw. 5, 2 jeweils um eine Polteilung gegeneinander versetzt sind. Die beiden Sternpunkte 19 und 20 sind hinsichtlich der induzierten Wechselspannungen äquipotential. Bezüglich des in die Sternpunkte 19 und 20 eingespeisten veränderbaren Gleichstromes I_{G} sind die Ausgangsklemmen U, V, W der Ankerwicklung äquipotential, somit beeinflußt dieser Gleichstrom den äußeren Stromkreis der Maschine nicht. Der Gleichstrom I_{G} kann grundsätzlich von einer beliebigen, zu den Teilwicklungen 1 bis 6 potentialfremden Gleichstromquelle bezogen werden. Im Beispiel nach FIG 2 liefert ein halbgesteuerter Brückengleichrichter 21 über eine Glättungsdrossel 22 den erforderlichen Gleichstrom I_{G}. Der Brückengleichrichter 21 wird von der Sekundärwicklung eines Transformators 23 gespeist, der primärseitig an die Ankerwicklung angeschlossen ist. Der Transformator 23 bewirkt einerseits eine Potentialtrennung des Brückengleichrichters 21 von der Ankerwicklung der Maschine, andererseits formt er die Speisespannung des Brückengleichrichters 21 auf den für den erforderlichen Gleichspannungsbereich optimalen Wert um.

Der Gleichstrom I_{G} erzeugt in den einzelnen Teilwicklungen 1 bis 6 die in den Figuren 1 und 2 durch Pfeile angedeuteten Durchflutungen. Sie sind alle radial und gleichsinnig gerichtet, erzeugen also ein homopolares Magnetfeld.

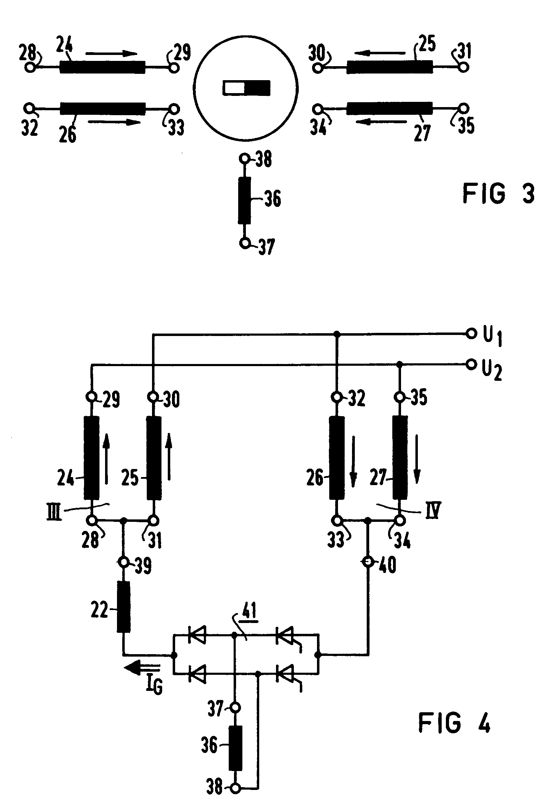

Die FIG 3 zeigt die Lage von vier Teilwicklungen 24 bis 27 bezogen auf zwei benachbarte Polteilungen einer permanentmagneterregten einphasigen Synchronmaschine. Auch hier erstreckt sich jede dieser Teilwicklungen 24 bis 27 bei zweipoligen Maschinen nur über eine Polteilung, bei höherpoligen Maschinen nur über von gleichpoligen induzierenden Magnetfeldern durchsetzte Teile des Ankerumfanges. Die Teilwicklungen 24 bis 27 bilden den die Nutzleistung abgegebenen Teil der Ankerwicklung. Zur Gewinnung des Gleichstromes I_{G} ist eine getrennte Zusatzwicklung 36 geringer Leistung vorgesehen. Da sich bei Einphasenmaschinen die Arbeitswicklung (Teilwicklungen 24 bis 27) nicht über alle Ankernuten erstreckt, ist die Zusatzwicklung 36 ohne zusätzlichen Raumbedarf unterbringbar.

FIG 4 stellt die Schaltung der nach FIG 3 angeordneten Teilwicklungen 24 bis 27 und der Zusatzwicklung 36 mit einer Anordnung zur Gewinnung des veränderbaren Gleichstromes I_{G} dar. Die Teilwicklungen 24 und 25 sind lt. FIG 3 um eine Polteilung gegeneinander versetzt und gemäß FIG 4 zu einer Wicklungsgruppe III hintereinandergeschaltet und an die Ausgangsklemmen U1 und U2 angeschlossen. Desgleichen sind die Teilwicklungen 26 und 27 zu einer Wicklungsgruppe IV hintereinandergeschaltet und ebenfalls an die Ausgangsklemmen U1 und U2 angeschlossen. Auch die jeweils an der gleichen Ausgangsklemme angeschlossenen Teilwicklungen 25 und 26 bzw. 24 und 27 sind um eine Polteilung gegeneinander versetzt. Der Gleichstrom I_{G}, der in die hinsichtlich der induzierten Wechselspannungen äquipotentialen Punkte 39 und 40 eingespeist wird, erzeugt in den Teilwicklungen 24 bis 27 die in den Figuren 3 und 4 durch Pfeile angedeuteten Durchflutungen, die, wie aus FIG 3 hervorgeht, radial und gleichsinnig gerichtet sind und somit ein homopolares Magnetfeld hervorrufen. Der veränderbare Gleichstrom I_{G} wird über eine Glättungsdrossel 22 von einem halbgesteuerten Brückengleichrichter 41 geliefert, den die Zusatzwicklung 36 speist.

Ist eine Maschine nach den Figuren 3 und 4 zweipolig oder mit einer anderen ungeraden Polpaarzahl ausgebildet, so müssen die Teilwicklungen 24 und 26 sowie die Teilwicklungen 25 und 27 jeweils an den gleichen Stellen des Ankerumfanges angeordnet sein. Wenn zur Vermeidung von örtlichen Schwankungen des homopolaren Magnetfeldes jede der Teilwicklungen 24 bis 27 als ungesehnte Zweischichtwicklung ausgebildet ist, so ergibt dies insgesamt vier Wicklungsschichten in jeder bewickelten Nut. Das wird vermieden, wenn die gegenseitige Versetzung der Teilwicklungen 24 und 25 sowie der Teilwicklungen 26 und 27 nicht um eine ganze Polteilung erfolgt, sondern hiervon zumindest um eine Nutteilung abweicht. Dies ermöglicht eine Verschachtelung der Teilwicklungen 24 und 26 sowie der Teilwicklungen 25 und 27 und damit eine Ausführung mit nur zwei Wicklungsschichten je bewickelter Nut. Die Wechselspannungen in den hintereinandergeschalteten Teilwicklungen 24, 25 bzw. 26, 27 jeder Wicklungsgruppe III bzw. IV sind dann nicht mehr genau gleichphasig, was jedoch die Wirkungsweise des Gleichstromes I_{G} nicht beeinflußt.

Bei einer Maschine nach den Figuren 3 und 4 mit gerader Polpaarzahl brauchen die Teilwicklungen 24 und 26 bzw. 25 und 27 nicht an den gleichen Stellen des Ankerumfanges zu liegen, sie können vielmehr auch um zwei Polteilungen gegeneinander versetzt angeordnet werden. Bei beibehaltener Gleichphasigkeit der Teilwicklungen jeder Wicklungsgruppe III bzw. IV ergeben sich dann nur zwei Wicklungsschichten in jeder bewickelten Nut.

## Patentansprüche

1. Elektrische Maschine, bei der aktive Eisenteile durch ein homopolares Magnetfeld vormagnetisierbar sind, **dadurch gekennzeichnet,** daß die Ankerwicklung der Maschine eine aus zwei parallelgeschalteten Wicklungsgruppen (I - IV) bestehende Trommelwicklung ist, wobei jede Wicklungsgruppe (I - IV) aus mehreren Teilwicklungen (1, 3, 5 bzw. 2, 4, 6 bzw. 24, 25 bzw. 26, 27) besteht, daß an zwei hinsichtlich der induzierten Wechselspannungen äquipotentialen Punkten (19, 20 bzw. 39, 40) der beiden Wicklungsgruppen (I, II bzw. III, IV) ein veränderbarer Gleichstrom (I_{G}) eingespeist ist, daß sich jede der zwischen einem der äquipotentialen Punkte (19 bzw. 20; 39 bzw. 40) und einer Ausgangsklemme (U bzw. V bzw. W; U1 bzw. U2) der Maschine liegenden Teilwicklungen (1 - 6 bzw. 24 - 27) nur über von gleichpoligen induzierenden Magnetfeldern durchsetzte Teile des Ankerumfanges erstreckt und die jeweils an den gleichen Ausgangsklemmen (U bzw. V bzw. W; U1 bzw. U2) liegenden Teilwicklungen (1, 4 bzw. 3, 6 bzw. 5, 2; 25, 26 bzw. 24, 27) der beiden Wicklungsgruppen (I und II bzw. III und IV) um eine bzw. um ein ungeradzahliges Vielfaches einer Polteilung gegeneinander versetzt angeordnet sind.

2. Elektrische Maschine nach Anspruch 1, **dadurch gekennzeichnet,** daß die Ankerwicklung mit einer geraden Anzahl von Wicklungsschichten je bewickelter Nut des Ankers ausgeführt ist.

3. Elektrische Maschine nach Anspruch 1 oder 2, **dadurch gekennzeichnet,** daß jede der beiden parallelgeschalteten Wicklungsgruppen (I und II) eine aus drei Teilwicklungen (1, 3, 5 bzw. 2, 4, 6) bestehende, in Stern geschaltete Drehstromwicklung ist und der veränderbare Gleichstrom (I_{G}) in die getrennten, äquipotentiale Punkte darstellenden Sternpunkte (19, 20) der beiden Wicklungsgruppen (1 und 2) eingespeist ist.

4. Elektrische Maschine nach Anspruch 1 oder 2, **dadurch gekennzeichnet,** daß jede der beiden parallelgeschalteten Wicklungsgruppen (III und IV) eine aus zwei hintereinandergeschalteten und um eine Polteilung gegeneinander versetzt angeordneten Teilwicklungen (24, 25 bzw. 26, 27) bestehende Einphasenwicklung ist und der veränderbare Gleichstrom (I_{G}) in die äquipotentiale Punkte darstellenden Verbindungspunkte (39, 40) der jeweils hintereinandergeschalteten Teilwicklungen (24, 25 bzw. 26, 27) der beiden Wicklungsgruppen (III und IV) eingespeist ist.

5. Elektrische Maschine nach Anspruch 1 oder 2, **dadurch gekennzeichnet,** daß jede der beiden parallelgeschalteten Wicklungsgruppen (III und IV) eine aus zwei hintereinandergeschalteten und mindestens angenähert um eine Polteilung gegeneinander versetzt angeordneten Teilwicklungen (24, 25 bzw. 26, 27) bestehende Einphasenwicklung ist und der veränderbare Gleichstrom (I_{G}) in die äquipotentiale Punkte darstellenden Verbindungspunkte (39, 40) von jeweils zwei hintereinandergeschalteten Teilwicklungen (24, 25 bzw. 26, 27) der beiden Wicklungsgruppen (III und IV) eingespeist ist.

## Claims

1. Electric machine in which active iron parts can be pre-magnetized through a homopolar magnetic field, characterised in that the armature winding of the machine is a drum winding consisting of two winding groups (I - IV) which are connected in parallel, with each winding group (I - IV) consisting of several part windings (1, 3, 5 and 2, 4, 6 and 24, 25 and 26, 27 respectively), in that a variable direct current (I_{G}) is fed in at two points (19, 20 and 39, 40) of the two winding groups (I, II and III, IV respectively), which points are equipotential with regard to the induced alternating voltages, in that each of the part windings (1 - 6 and 24 - 27), which lie between one of the equipotential points (19 and 20 respectively; 39 and 40 respectively) and an output terminal (U and V and W respectively; U1 and U2 respectively) of the machine, only extends over parts of the periphery of the armature, through which parts unipolar inducing magnetic fields permeate, and the part windings (1, 4 and 3, 6 and 5, 2; 25, 26 and 24, 27) of the two winding groups (I and II, and III and IV respectively), which windings connect respectively to the same output terminals (U and V and W respectively; U1 and U2 respectively), are arranged so as to be staggered relative to each other by one pole pitch or an odd multiple of one pole pitch.

2. Electric machine according to claim 1, characterised in that the armature winding is realized with an even number of winding layers per wound slot of the armature.

3. Electric machine according to claim 1 or 2, characterised in that each of the two winding groups (I and II), which are connected in parallel, is a three-phase winding which consists of three part windings (1, 3, 5 and 2, 4, 6 respectively) and is star-connected, and the variable direct current (I_{G}) is fed into the separate star points (19, 20), representing equipotential points, of the two winding groups (1 and 2).

4. Electric machine according to claim 1 or 2, characterised in that each of the two winding groups (III and IV), which are connected in parallel, is a single-phase winding which consists of two series-connected part windings (24, 25 and 26, 27 respectively) which are arranged so as to be staggered relative to each other by one pole pitch, and the variable direct current (I_{G}) is fed into the interconnection points (39, 40), representing equipotential points, of the part windings (24, 25 and 26, 27 respectively), connected in series in each case, of the two windings groups (III and IV).

5. Electric machine according to claim 1 or 2, characterised in that each of the two winding groups (III and IV), which are connected in parallel, is a single-phase winding which consists of two series-connected part windings (24, 25 and 26, 27 respectively) which are arranged so as to be staggered relative to each other at least approximately by one pole pitch, and the variable direct current (I_{G}) is fed into the interconnection points (39, 40), representing equipotential points, of, in each case, two series-connected part windings (24, 25 and 26, 27 respectively) of the two winding groups (III and IV).

## Revendications

1. Machine électrique dans laquelle des pièces en fer actives peuvent être préaimantées par un champ magnétique homopolaire, caractérisée par le fait que l'enroulement d'induit de la machine est un enroulement en tambour constitué par deux groupes d'enroulements (I-IV) branchés en parallèle, chaque groupe d'enroulements (I-IV) étant constitué par deux enroulements partiels (1, 3, 5 ou 2, 4, 6 ou 24, 25 ou 26, 27), qu'un courant continu variable (I_{G}) est introduit en deux points (19, 20 ou 39, 40), qui sont équipotentiels du point de vue des tensions alternatives induites, des deux groupes d'enroulements (I, II ou III, IV), que chacun des enroulements partiels (1-6 ou 24-27), qui sont situés entre l'un des points équipotentiels (19, 20 ou 39, 40) et une borne de sortie (U ou V ou W; U1 ou U2) de la machine, s'étend seulement sur des parties de la circonférence de l'induit, qui sont traversées par des champs magnétiques inducteurs de même polarité, et les enroulements partiels (1, 4 ou 3, 6 ou 5, 2; 25, 26 ou 24, 27), qui sont raccordés respectivement aux mêmes bornes de sortie (U ou V ou W; U1 ou U2), des deux groupes d'enroulements (I et II ou III et IV), sont disposés en étant décalés réciproquement d'un pas polaire ou d'un multiple impair d'un pas polaire.

2. Machine électrique suivant la revendication 1, caractérisée par le fait que l'enroulement d'induit est réalisé avec un nombre pair de couches d'enroulement dans chaque encoche bobinée de l'induit.

3. Machine électrique suivant la revendication 1 ou 2, caractérisée par le fait que chacun des deux groupes d'enroulements (I et II), branchés en parallèle est un enroulement à courant triphasé branché en étoile et constitués par trois enroulements partiels (1, 3, 5 ou 2, 4, 6), et que le courant continu variable (I_{G}) est injecté aux neutres séparés (19, 20), qui représentent des points équipotentiels, des deux groupes d'enroulements (1 et 2).

4. Machine électrique suivant la revendication 1 ou 2, caracctérisée par le fait que chacun des deux groupes d'enroulements branchés en parallèle (III et IV) est un enroulement monophasé constitué par deux enroulements partiels (24, 25 ou 26, 27) branchés en série et décalés réciproquement d'un pas polaire, et que le courant continu variable (I_{G}) est introduit, dans les points de liaison (30, 40) représentant des points équipotentiels, des enroulements partiels (24, 25 ou 26, 27), branchés respectivement en série, des deux groupes d'enroulements (III et IV).

5. Machine électrique selon la revendication 1 ou 2, caractérisée par le fait que chacun des deux groupes d'enroulements (III et IV) branchés en parallèle est un enroulement monophasé constitué par deux enroulements partiels (24, 25 ou 26, 27) branchés en série et disposés en étant décalés réciproquement au moins approximativement d'un pas polaire, et que le courant continu variable (I_{G}) est introduit dans les points de liaison (39, 40), représentant des points équipotentiels, de respectivement deux enroulements partiels (24, 25 ou 26, 27), qui sont branchés en série, des deux groupes d'enroulements (3 et 4).
